# EUROPÄISCHE PATENTANMELDUNG

(11) **EP 3 189 745 A1**
(43) Veröffentlichungstag der Anmeldung: **12.07.2017**
(21) Anmeldenummer: 16150240.6
(22) Anmeldetag: 05.01.2016
(51) Int. Cl.: A44C 17/00, A44C 15/00, H01L 31/0224, G06F 3/0354

(54) **DEKORATIVER VERBUNDKÖRPER MIT ELEKTRISCH LEITFÄHIGER SCHICHT UND ELEKTRONISCHEM SENSOR**

(71) Anmelder: D. Swarovski KG, 6112 Wattens (AT)
(72) Erfinder: Gapp, Christof, 6071 Aldrans (AT); Scholz, Martin, 6112 Wattens (AT); Altenberger, Ernst, 6114 Kolsass (AT); Mair, Mathias, 6171 Völs (AT); Lexer, Franz, 6094 Axams (AT); Leber, Annemarie, 6263 Fügen (AT)
(74) Vertreter: Moore, Michael Richard

(57) **Zusammenfassung**

Vorgeschlagen wird ein Schmuckelement (1), enthaltend
(a) einen Schmuckstein (2) und
(b) eine elektrisch leitfähige Schicht (5) auf wenigstens einem Teilbereich des Schmucksteins (2).

## Beschreibung

### GEBIET DER ERFINDUNG

Die Erfindung betrifft ein Schmuckelement, welches einen Schmuckstein, und eine elektrisch leitfähige Schicht auf wenigstens einem Teilbereich des Schmucksteines enthält. Das Schmuckelement ist zur elektronischen Funktionssteuerung geeignet.

### STAND DER TECHNIK

Schmucksteine wurden bisher nahezu ausschließlich für rein ästhetische Zwecke in Accessoires und auf Textilien eingesetzt, hatten aber kaum funktionale Wirkung. Im Bereich tragbarer Elektronik (sogenannte Wearable Technologies), einem Markt mit enormen Wachstumschancen, fehlen sie, da dieser Bereich von den Anwendern mehr mit Funktionalität als mit Schmuck verbunden wird. Der Einsatz funktionaler Schmucksteine ist generell überall dort denkbar, wo Funktionalität und Ästhetik gefordert sind, aber insbesondere dann ist die Funktionssteuerung elektronischer Geräte eine Herausforderung. Berührungsempfindliche elektronische Sensoren, wie sie beispielsweise von Touchscreens bekannt sind, ermöglichen eine komfortable Funktionssteuerung elektronischer Geräte mittels Finger oder Eingabestift. Die Eingabeschnittstelle eines elektronischen Gerätes ist der Geräteteil, durch dessen Berührung eine Funktion ausgelöst wird. Schmucksteine, die als Eingabeschnittstelle von Geräten fungieren und eine exakte berührungsempfindliche Handhabung der Geräte ermöglichen, fehlen.

Die Patentschrift US 7,932,893 beschreibt eine Uhr mit berührungsempfindlichen Sensoren, die der Steuerung eines Computercursors dienen.

In der Patentschrift US 6,868,046 wird eine Uhr mit kapazitiven Tasten offenbart. Die kapazitiven Tasten werden manuell mittels Finger bedient und dienen der Steuerung der Uhrzeiger.

Bisher fehlte jegliche technische Lösung, Schmucksteine so zu adaptieren, dass sie zur Funktionssteuerung elektronischer Geräte geeignet sind. Aufgabe der vorliegenden Erfindung war es, ein Schmuckelement bereitzustellen, mit dem eine Funktionssteuerung elektronischer Geräte möglich ist.

### BESCHREIBUNG DER ERFINDUNG

Ein erster Gegenstand der vorliegenden Erfindung betrifft ein Schmuckelement, welches
(a) einen Schmuckstein und
(b) eine elektrisch leitfähige Schicht, auf wenigstens einem Teilbereich des Schmucksteines enthält.

Ein weiterer Gegenstand der vorliegenden Erfindung ist ein Verfahren zur Funktionssteuerung von elektronischen Geräten, das die folgenden Schritte umfasst:
a) Bereitstellen eines Schmucksteins, der mit einer elektrisch leitfähigen Schicht beschichtet ist,
(b) Berühren der elektrisch leitfähigen Schicht mit einem Finger oder Eingabestift und
(c) Auslösen einer Funktion der Auswertesensorik durch die Berührung.

Schmucksteine, die mit einer elektrisch leitfähigen Schicht beschichtet sind, können beispielsweise durch Verklebung auf kapazitiven Touchscreens, Touchpads oderTrackpads, wie sie beispielweise von Smartphones oder Laptops bekannt sind, zur Funktionssteuerung elektronischer Geräte verwendet werden. Vorzugsweise sind die elektronischen Sensoren zur Funktionssteuerung in den Touchscreens, Touchpads oder Trackpads enthalten. Bei weiteren erfindungsgemäß bevorzugten Anwendungsmöglichkeiten ist die elektrisch leitfähige Schicht direkt mit der Auswertesensorik (vide infra) verbunden. Schmuckelemente, die auf diese Art aufgebaut sind, sind vielfältig einsetzbar. Bei Schmuckstücken, beispielsweise Armbändern, Ringen, Halsketten oder Broschen, die elektronische Bauelemente/Geräte enthalten, umfasst das erfindungsgemäße Schmuckelement vorzugsweise zur Funktionssteuerung zusätzlich einen elektronischen Sensor. Gegenstände enthaltend ein erfindungsgemäßes Schmuckelement, sind ebenfalls Gegenstand der Erfindung. Beispielweise kann das Schmuckelement vorteilhaft in sogenannte Activity Tracker eingebaut werden, die somit ebenfalls Gegenstand der Erfindung sind. Weitere Anwendungsmöglichkeiten werden nachfolgend erwähnt. Gegenstand der vorliegenden Erfindung ist auch die Verwendung des erfindungsgemäßen Schmuckelementes zur Funktionssteuerung elektronischer Geräte.

Überraschenderweise wurde gefunden, dass sich eine Kombination aus einem Schmuckstein mit einer elektrisch leitfähigen Schicht und einem elektronischen Sensor als Eingabeschnittstelle für die verschiedensten Zwecke eignet, beispielsweise zur Helligkeitsregulierung eines Displays. Die erfindungsgemäße Kombination liefert vielfältige Einsatzmöglichkeiten im Design- und Technologiebereich, sowohl als Eingabeschnittstelle zur Funktionssteuerung als auch als Schmuckstein. Ein Schmuckstein mit einer elektrisch leitfähigen Schicht ermöglicht die Funktionssteuerung elektronischer Geräte durch Berührung der elektrisch leitfähigen Schicht mit einem Finger oder elektrisch leitfähigen Eingabestift. Als elektrisch leitfähige Schicht können Schichten aus verschiedensten Materialien aufgetragen werden, beispielsweise sind metallische Schichten oder transparente leitfähige Oxidschichten geeignet (vide infra). Vorzugsweise ist die elektrisch leitfähige Schicht transparent, um die Farbe des Schmucksteins wahrnehmen zu können. Erfindungsgemäß bevorzugt ist der Schmuckstein transparent, um eine Brillanz zu erhalten. Durch ein brillantes Erscheinungsbild erhalten Schmucksteine eine besondere ästhetische Wirkung. Erfindungsgemäß besonders bevorzugt ist eine Kombination aus einer transparenten elektrisch leitfähigen Schicht und einem transparenten Schmuckstein.

Vorzugsweise wird zusätzlich eine wellenlängenselektive Schicht auf wenigstens einen Teilbereich des Schmucksteines aufgebracht. Durch die Kombination eines transparenten Schmucksteins mit einer transparenten, elektrisch leitfähigen Schicht und einerwellenlängenselektiven Schicht wird die Brillanz des Schmucksteines verbessert. Unter Transparenz wird dabei die Fähigkeit von Materie, elektromagnetische Wellen hindurchzulassen (Transmission), verstanden. Ist ein Material für einfallende elektromagnetische Strahlung (Photonen) eines mehr oder weniger breiten Frequenzspektrums transparent, kann diese das Material nahezu vollständig durchdringen, wird also kaum reflektiert und kaum absorbiert. Erfindungsgemäß bevorzugt wird unter Transparenz eine Transmission von wenigstens 60 % des einfallenden Lichtes verstanden, vorzugweise mehr als 70 % und besonders bevorzugt mehr als 80 %. Auf Schmucksteine kann auch eine sogenannte Verspiegelung aufgetragen werden. Eine Verspiegelung ist beispielsweise eine Silberschicht, die nasschemisch aufgetragen wird. Eine Verspiegelung kann gegebenenfalls auch als wellenlängenselektive Schicht fungieren.

Erfindungsgemäß bevorzugt werden facettierte Schmucksteine eingesetzt. Unter Facettierung wird erfindungsgemäß die Gestaltung einer Oberfläche eines Schmucksteins mit Vielecken oder sogenannten Polygonen (n≥3) verstanden; Facettierungen werden üblicherweise durch Schleifen eines Kristallrohlings erhalten, sind aber auch durch Pressverfahren zugänglich.

Erfindungsgemäß bevorzugt weisen die Schmucksteine eine plan-konvexe oder eine plan-konvex-konkave Geometrie auf, da sich die Schmucksteine durch den planen Teilbereich sehr gut applizieren lassen. Durch den gekrümmten konvexen oder konvex-konkaven Teilbereich wird eine komfortable Bedienung der Schmuckkomponente erleichtert und die Ästhetik des Schmuckelementes unterstützt. Die Begriffe konvex und konkav beziehen sich auf eine gedachte einhüllende Fläche oberhalb beziehungsweise unterhalb der Facetten und die Definitionen sind analog zu Linsen in der Optik zu verstehen. Die konvexen und konkaven Teilbereiche können dabei sowohl symmetrisch als auch asymmetrisch sein.

Mögliche Aufbauweisen des Schmuckelements (Verbundkörper) sind in den Abbildungen (1), (2a) bis (2d) und (3a) bis (3b) dargestellt, wobei die Bezugszeichen folgende Bedeutung haben:
(1) Schmuckelement;
(2) Schmuckstein;
(3) wellenlängenselektive Beschichtung;
(4) Klebstoff;
(5) elektrisch leitfähige Schicht;
   (5.1), (5.2), (5.3), (5.4), (5.5) und (5.6) Teilbereiche mit elektrisch leitfähiger Schicht;
(6) elektrisch leitfähige Verbindung;
(7) Auswertesensorik;
(8) Kontaktierung durch Federkontaktstift;
(9) Kontaktierung durch Schmucksteinfassung;
(10) Kontaktierung durch elektrisch leitfähigen Klebstoff;
(11) Kontaktierung durch elektrisch leitfähige Folie, metallische Verspiegelung oder elektrisch leitfähiges Elastomer;
(12) Berührung mit einem Finger beziehungsweise Eingabestift
(13) Bewegung in Pfeilrichtung
(14) Bewegung in geänderte Pfeilrichtung

Vorzugsweise umfasst das Schmuckelement einen transparenten facettierten Schmuckstein aus Glas und eine transparente elektrisch leitfähige Schicht. Besonders bevorzugt ist eine Ausführungsform des Schmuckelementes mit einem transparenten facettierten Schmuckstein aus Glas, mit Indiumzinnoxid als transparente elektrisch leitfähige Schicht, sowie zusätzlich einer wellenlängenselektiven Beschichtung, die aus einer Abfolge von SiO₂-und TiO₂-Schichten aufgebaut ist. In einer ganz besonders bevorzugten Ausführungsform des Schmuckelementes ist zusätzlich ein elektronischer Sensor enthalten.

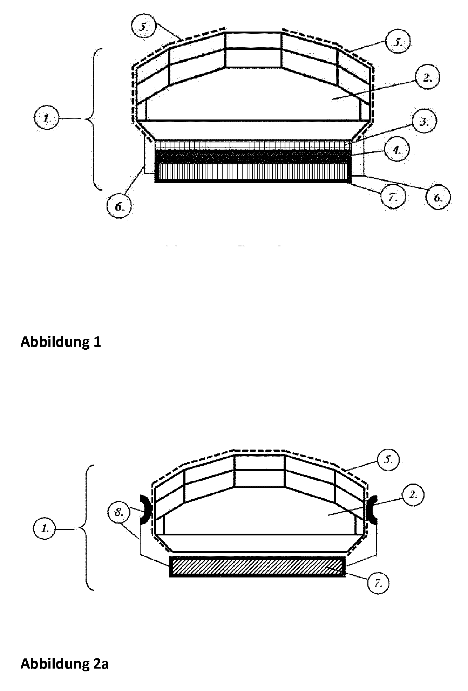

Die elektrisch leitfähige Schicht (vide infra) ist erfindungsgemäß bevorzugt auf der bevorzugten konvex/konkav gekrümmten Oberfläche des Schmucksteins aufgebracht (Abbildung 1). Die Schicht (5) ist in Abbildung 1 nicht durchgängig gezeichnet, da sie im Sinne der Erfindung auch in räumlich getrennten Teilbereichen abgeschieden werden kann (vide infra). Die wellenlängenselektive Beschichtung (vide infra) befindet sich vorzugsweise direkt auf der der konvex/konkav gekrümmten Oberfläche gegenüberliegenden planaren Seite, also auf der Rückseite des plan-konvex-konkaven oder des plan-konvexen Schmucksteins (Abbildung 1).

Die Verbindung des Schmuckelementes mit einer Auswertesensorik (vide infra) ermöglicht die Funktionssteuerung elektronischer Geräte. Durch das Berühren der elektrisch leitfähigen Schicht mittels Finger oder einem elektrisch leitfähigen Eingabestift wird ein Signal ausgelöst, das der Funktionssteuerung elektronischer Geräte dient. Gerade bei tragbaren elektronischen Geräten ist aufgrund der geringen Baugröße die Funktionssteuerung der elektronischen Geräte eine Herausforderung. Das erfindungsgemäße Schmuckelement verbindet hohe Brillanz mit einer Eingabeschnittstelle. Das erfindungsgemäße Schmuckelement ist aber nicht nur auf den Bereich der tragbaren elektronischen Geräte beschränkt. Es ist überall dort denkbar, wo Funktionalität und Ästhetik erwünscht sind. Vorstellbar ist beispielweise die Verwendung des Schmuckelementes als Lichtschalter. Hierbei wird durch die Berührung des Schmuckelementes das Licht ein- oder ausgeschaltet, eine Dimmfunktion ist ebenfalls möglich. Generell können Funktionen elektronischer Geräte, wie beispielsweise Fernsehgeräte, Radiogeräte oder Mediaplayer durch das Schmuckelement gesteuert werden.

Eine weitere Anwendung des Schmuckelements stellen etwa Finger- beziehungsweise Ohrringe dar, bei denen es als Schmuckstein fungiert und gleichzeitig die Funktionssteuerung eines elektronischen Gerätes ermöglicht. So kann beispielsweise ein mit dem erfindungsgemäßen Schmuckelement ausgerüsteter Ring zur Messung bestimmter Körperfunktionen eingesetzt werden. Verschiedenste Funktionssteuerungsmöglichkeiten sind denkbar, beispielsweise eine Einschalt- und Ausschaltfunktion oder Umschaltmöglichkeit zwischen verschiedenen Betriebsmodi.

Das erfindungsgemäße Schmuckelement kann auch zur Funktionssteuerung für sogenannte schaltbare Effekte eingesetzt werden, beispielsweise für eine Farbänderung, zum Beispiel mittels RGB-LED, eines Schmucksteins oder beispielsweise die Displayfunktionen einer sogenannten Smart Watch. Schaltbare Effekte lassen sich mit dem Schmuckelement und einer geeigneten Auswertesensorik (vide infra) durch Berühren der elektrisch leitfähigen Schicht des Schmuckelementes, beispielsweise mit einem Finger, steuern. Die Berührung der elektrisch leitfähigen Schicht des Schmuckelementes kann beispielsweise die Farbänderung eines Schmucksteines bewirken.

Das Schmuckelement oder eine Mehrzahl von Schmuckelementen kann beispielsweise in ein Armband integriert werden, um zum Beispiel die Funktionen einer Smart-Watch oder eines Aktivitätssensors (activity tracker) zu steuern. Bei einer Mehrzahl von Schmuckelementen können die einzelnen Schmuckelemente für sich zur Funktionssteuerung herangezogen werden. Die Schmuckelemente können auch zur Funktionssteuerung miteinander, beispielsweise durch Kabel, verbunden werden, sodass erst das aufeinanderfolgende Berühren mehrerer Schmucksteine eine Funktion bewirkt (vide infra), zum Beispiel die Helligkeitsregulierung eines Displays und die Lautstärkeregulierung von Lautsprechern.

### Schmuckstein

Der Schmuckstein kann aus einer Vielzahl verschiedenartiger Materialien gefertigt sein, beispielsweise aus Glas, Kunststoff, Keramik oder Edelsteinen oder Halbedelsteinen. Erfindungsgemäß bevorzugt sind Schmucksteine, die aus Glas oder aus Kunststoff hergestellt sind, da diese am kostengünstigsten sind und am leichtesten mit Facetten versehen werden können. Erfindungsgemäß besonders bevorzugt ist die Verwendung von Glas. Insbesondere bevorzugt sind facettierte Schmucksteine aus Glas. Die Schmucksteine umfassen bevorzugt konvex gekrümmte oder konvex und konkav gekrümmte Bereiche. Dies bedeutet, dass auf der facettierten Seite neben den konvex gekrümmten Bereichen auch konkav gekrümmte Bereiche vorhanden sein können. Die der facettierten Seite gegenüberliegende Seite des Schmucksteins ist entweder plan (bevorzugt) oder aber konkav. Besonders bevorzugt sind facettierte Schmucksteine mit konvexer, insbesondere plan-konvexer Geometrie.

### Glas

Die Erfindung ist bezüglich der Zusammensetzung des Glases prinzipiell nicht limitiert. Unter Glas wird eine eingefrorene unterkühlte Flüssigkeit verstanden, die einen amorphen Festkörper bildet. Erfindungsgemäß können sowohl oxidische Gläser als auch Chalkogenidgläser, metallische Gläser oder nicht-metallische Gläser eingesetzt werden. Auch Oxy-Nitrid-Gläser können geeignet sein. Es kann sich um Einkomponenten- (z.B. Quarzglas) oder Zweikomponenten- (zum Beispiel Alkaliboratglas) oder Mehrkomponentengläser (Kalk-Natron-Glas) handeln. Das Glas kann durch Schmelzen, durch Sol-Gel-Prozesse oder auch durch Stoßwellen hergestellt werden. Die Verfahren sind dem Fachmann bekannt. Erfindungsgemäß bevorzugt sind anorganische Gläser, insbesondere oxidische Gläser. Hierzu gehören Silikatgläser, Boratgläser oder Phosphatgläser. Besonders bevorzugt sind bleifreie Gläser.

Für die Herstellung der Schmucksteine werden silikatische Gläser bevorzugt. Silikatische Gläser haben gemeinsam, dass ihr Netzwerk hauptsächlich aus Siliziumdioxid (SiO₂) gebildet wird. Durch Zugabe weiterer Oxide wie beispielsweise Aluminiumoxid oder verschiedener Alkalioxide entstehen die Alumo- oder Alkali-Silikatgläser. Treten als Hauptnetzwerkbildner eines Glases Phosphorpentoxid oder Bortrioxid auf, spricht man von Phosphat- beziehungsweise Boratgläsern, deren Eigenschaften ebenfalls durch Zugabe weiterer Oxide eingestellt werden können. Auch diese Gläser sind im Sinne der Erfindung einsetzbar. Die genannten Gläser bestehen größtenteils aus Oxiden, weshalb man sie zusammenfassend als oxidische Gläser bezeichnet.

In einer erfindungsgemäß bevorzugten Ausführungsform enthält die Glaszusammensetzung folgende Komponenten:
(a) etwa 35 bis etwa 85 Gew.-% SiO_{2;}
(b) 0 bis etwa 20 Gew.-% K₂O;
(c) 0 bis etwa 20 Gew.-% Na₂O;
(d) 0 bis etwa 5 Gew.-% Li₂O;
(e) 0 bis etwa 13 Gew.-% ZnO;
(f) 0 bis etwa 11 Gew.-% CaO;
(g) 0 bis etwa 7 Gew.-% MgO;
(h) 0 bis etwa 10 Gew.-% BaO;
(i) 0 bis etwa 4 Gew.-% Al₂O₃;
(j) 0 bis etwa 5 Gew.-% ZrO₂;
(k) 0 bis etwa 6 Gew.-% B₂O₃;
(l) 0 bis etwa 3 Gew.-% F;
(m) 0 bis etwa 2,5 Gew.-% Cl.

Alle Mengenangaben sind dabei so zu verstehen, dass sie sich mit gegebenenfalls weiteren Komponenten zu 100 Gew.-% ergänzen. Die Facettierung der Schmucksteine wird üblicherweise durch Schleif- und Poliertechniken erhalten, die dem Fachmann hinlänglich bekannt sind.

Erfindungsgemäß geeignet ist beispielsweise ein bleifreies Glas, insbesondere das von der Firma Swarovski für die Chessboard Flat Backs verwendete Glas (Katalog-Nummer 2493), welches eine Transmission von > 95 % im Bereich 380 -1200 nm aufweist.

### Kunststoff

Als weiterer Rohstoff für die Herstellung des Schmucksteins (a) können Kunststoffe eingesetzt werden. Erfindungsgemäß bevorzugt sind transparente Kunststoffe. Erfindungsgemäß geeignet sind unter anderem folgende Materialien:
- Acrylglas (Polymethylmetacrylate, PMMA),
- Polycarbonat (PC),
- Polyvinylchlorid (PVC),
- Polystyrol (PS),
- Polyphenylenether (PPO),
- Polyethylen (PE),
- Poly(n-methylmethacrylimid (PMMI).

Die Vorteile der Kunststoffe gegenüber Glas liegen insbesondere im geringeren spezifischen Gewicht, das nur rund die Hälfte des Glases beträgt. Auch andere Materialeigenschaften sind gezielt einstellbar. Kunststoffe sind zudem oft einfacher zu bearbeiten als Glas. Nachteilig wirkt sich der im Vergleich zu Glas geringe Elastizitätsmodul und die geringe Oberflächenhärte sowie der massive Festigkeitsabfall bei Temperaturen ab ca. 70°C aus. Ein erfindungsgemäß bevorzugter Kunststoff ist Poly(n-methylmethacrylimid), der beispielsweise von Evonik unter dem Namen Pleximid^{®} TT70 vertrieben wird. Pleximid^{®} TT70 hat einen Brechungsindex von 1,54 und einen Transmissionsgrad von 91 %, gemessen nach ISO 13468-2 unter Verwendung von D65-Normlicht.

### Geometrie

Die geometrische Ausgestaltung des Schmucksteins ist prinzipiell nicht limitiert und hängt vorwiegend von Designaspekten ab. Der Schmuckstein ist vorzugsweise quadratisch, rechteckig oder rund. Erfindungsgemäß bevorzugt ist der Schmuckstein facettiert. Der Schmuckstein weist vorzugsweise eine konvexe, insbesondere eine plan-konvexe Geometrie auf. Vorzugsweise enthält der Schmuckstein eine Vielzahl von Facetten auf der vorzugsweise konvex gekrümmten Seite.

Die Art der Facettierung hängt eng mit der Geometrie des Schmucksteines zusammen. Prinzipiell ist die geometrische Form der Facetten nicht limitiert. Erfindungsgemäß bevorzugt sind quadratische oder rechteckige Facetten, insbesondere in Kombination mit einem quadratisch oder rechteckig dimensionierten Schmuckstein mit plankonvexer Geometrie. Ebenso können jedoch runde, facettierte Schmucksteine verwendet werden.

### SENSORIK

Durch berührungsempfindliche elektronische Schaltungen, wie sie beispielsweise bei Touchscreens eingesetzt werden, ist die Funktionssteuerung elektronischer Geräte mittels Finger oder elektrisch leitfähigem Eingabestift auf effiziente Art möglich. Für berührungsempfindliche elektronische Schaltungen eignen sich verschiedene elektronische Sensoren. Erfindungsgemäß bevorzugt werden als elektronische Sensoren resistive oder kapazitive Sensoren verwendet, besonders bevorzugt kapazitive Sensoren. Eine kapazitive Sensorik umfasst ein elektronisches Bauteil mit Kondensator und Eingabeschnittstelle. Die Eingabeschnittstelle ist beim Schmuckelement der Schmuckstein mit der elektrisch leitfähigen Schicht. Der Kondensator ändert durch die Berührung der Eingabeschnittstelle mit einem Finger oder einem elektrisch leitfähigen Eingabestift seine Kapazität. Diese Änderung wird elektronisch erfasst und mittels weiterer elektronischer Steuerelemente weiterverarbeitet. Die kapazitive beziehungsweise resistive Sensorik und die weiterverarbeitenden elektronischen Steuerelemente werden Auswertesensorik genannt. Vorzugsweise ist die elektrisch leitfähige Schicht mit der Auswertesensorik verbunden. Das ermöglicht eine sehr gute Bedienbarkeit des Schmuckelementes.

Dem Fachmann sind die Ausführungsformen von kapazitiven und resistiven Sensoren hinlänglich bekannt. Die resistive Sensorik umfasst ein elektronisches Bauteil mit zwei getrennten elektrischen Kontaktflächen. Die zwei getrennten elektrischen Kontaktflächen werden durch den mit der elektrisch leitfähigen Schicht beschichteten Schmuckstein verbunden. Bei der resistiven Sensorik führt die Berührung des beschichteten Schmucksteines mit einem Finger oder einem elektrisch leitfähigen Eingabestift zu einem Stromfluss. Der Stromfluss kann elektronisch erfasst werden. Die Erfassung des Stromflusses als Steuerungssignal ermöglicht die Funktionssteuerung elektronischer Geräte. Als resisitive Sensorik eignet sich beispielsweise die Darlingtonschaltung.

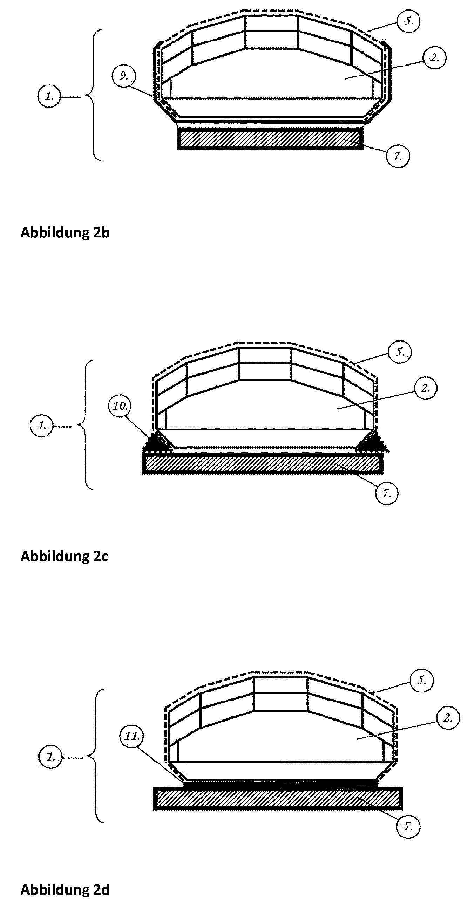

Die Verbindung von Eingabeschnittstelle und Sensorik wird vorzugsweise durch eine elektrisch leitfähige Kontaktierung hergestellt (Abb. 1 und 2a bis 2d). Dies hat den Vorteil, dass keine Beeinträchtigung der Funktionssteuerung auftritt. Im Sinne der Erfindung ist eine elektrisch leitfähige Kontaktierung beispielsweise durch einen Federkontaktstift möglich (Abb. 2a). Durch Federdruck auf die elektrisch leitfähige Schicht stellt der Federkontaktstift (8) eine elektrisch leitende Verbindung zwischen elektrisch leitfähiger Schicht am Schmuckstein und der Sensorik her. Alternativ kann auch eine elektrisch leitfähige Schmucksteinfassung zur Kontaktierung verwendet werden (Abb. 2b). Ein elektrisch leitfähiger Teil der Schmucksteinfassung (9) dient beispielsweise der Halterung des Schmucksteines. Die Verbindung von elektrisch leitfähiger Schicht und elektrisch leitfähigem Teil der Schmucksteinfassung stellt die Kontaktierung her.

Alternativ dazu eignet sich als elektrisch leitfähige Kontaktierung beispielsweise ein elektrisch leitfähiger Klebstoff (Abb. 2c), zum Beispiel 3M™ 5303 R-25µ / 5303 R-50 µ der Firma 3M, eine elektrisch leitfähige Klebefolie (Abb. 2d), zum Beispiel 3M^{®} Anisotropic Conductive Film 7379 der Firma 3M oder ein elektrisch leitfähiges Elastomer (Abb. 2d), zum Beispiel Silver Zebra^{®} Connector der Firma Fuji Polymer Industries Co. LTD. Die elektrisch leitfähige Verbindung kann auch durch eine Kabelverbindung hergestellt werden. Die elektrisch leitfähigen Verbindungsmöglichkeiten sind dem Fachmann hinlänglich bekannt.

### Push- und Slide-Eingabe:

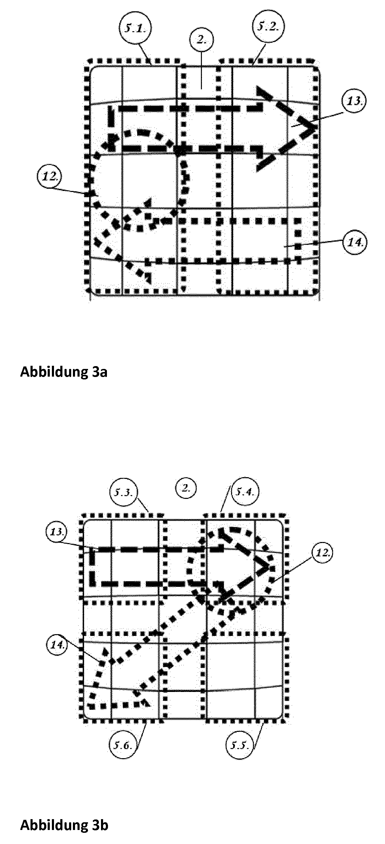

Die Funktionssteuerung mittels elektrisch leitfähiger Schicht ist auf verschiedene Arten möglich. Eine Ausführungsform ist die *Push-Eingabe.* Bei der Push-Eingabe wird durch die Berührung der elektrisch leitfähigen Schicht mit einem Finger oder einem elektrisch leitfähigen Eingabestift eine Funktion der Auswertesensorik ausgelöst, beispielsweise das Ein- oder Ausschalten eines elektronischen Gerätes. Für die Push-Eingabe ist es nicht erforderlich, dass die gesamte Oberfläche des Schmucksteines mit der elektrisch leitfähigen Schicht beschichtet ist. Die elektrisch leitfähige Schicht kann auch nur auf einem Teilbereich der Schmucksteinoberfläche aufgebracht sein (Abb. 3a und 3b).

Wird die elektrisch leitfähige Schicht beispielsweise auf wenigstens zwei elektrisch getrennten Teilbereichen der Schmucksteinoberfläche aufgebracht (gestrichelte Rechtecke in Abb. 3a und 3b) und bewirken die getrennten Teilbereiche unterschiedliche Funktionen, dann ist eine elektrisch leifähige Kontaktierung zwischen den Teilbereichen der elektrisch leitfähigen Schicht und der Auswertesensorik erforderlich (Abb. 1). Ein Teilbereich ermöglicht beispielweise das Ein- und Ausschalten des elektronischen Gerätes, der andere Teilbereich beispielsweise das Umschalten zwischen den Betriebsmodi. Dadurch ergibt sie eine größere Anzahl von Möglichkeiten zur Funktionssteuerung. Da Schmuckelemente häufig in eine Fassung eingebaut werden, kann die Verbindung zur elektrisch leitfähigen Kontaktierung beispielsweise in der Fassung erfolgen (vide supra). Die verschiedenen Möglichkeiten zur Herstellung einer elektrisch leitfähigen Verbindung sind dem Fachmann hinlänglich bekannt (vide supra).

Die *Slide-Eingabe* ist eine weitere Möglichkeit der Funktionssteuerung. Bei dieser Eingabeart ist es erforderlich, dass die elektrisch leitfähige Schicht auf wenigstens zwei getrennten Bereichen der gekrümmten facettierten Oberfläche aufgebracht ist (gestrichelte Rechtecke 5.1 und 5.2 in Abb. 3a sowie 5.3, 5.4, 5.5 und 5.6 in Abb. 3b). Die Funktionssteuerung erfolgt durch eine vorgegebene aufeinanderfolgende Berührung der getrennten Teilbereiche mit einem Finger oder einem elektrisch leitfähigen Eingabestift (12 in Abb. 3a und 3b). Der Finger beziehungsweise elektrisch leitfähige Eingabestift bewegt sich in Pfeilrichtung (13 bzw. 14 in Abb. 3a und 3b). Diese komfortable Art der Eingabe ist auch von Smartphones bekannt. Die elektrisch leitfähige Verbindung zwischen elektrisch leitfähiger Schicht und Auswertesensorik kann auf verschiedene Arten erfolgen, die dem Fachmann hinlänglich bekannt sind (vide supra).

Bei der Push- und bei der Slide-Eingabe ist daher für eine komfortable Funktionssteuerung die elektrisch leitfähige Schicht in wenigstens zwei getrennten Bereichen von Vorteil. Vorzugsweise wird daher die elektrisch leitfähige Schicht auf wenigstens zwei getrennten Teilbereichen der gekrümmten facettierten Schmucksteinoberfläche aufgebracht. Weitere Funktionssteuerungsmöglichkeiten ergeben sich, wenn die Push- und die Slide-Eingabe in einem Schmuckelement kombiniert werden, beispielsweise eine Slide-Eingabe mit den räumlich getrennten Bereichen 5.3, 5.4, 5.6 und eine Push-Eingabe mit dem Bereich 5.5 (Abb. 3b).

Erfindungsgemäße Schmuckelemente die eine Push- und/oder Slide-Eingabe vorweisen, können beispielsweise bei Armbändern, Ringen, Halsketten, Broschen, Taschen, Headsets oder Activity Trackern eingesetzt werden. Die Schmuckstücke, wie beispielsweise Armbänder, Ringe, Halsketten oder Broschen enthalten entweder selbst elektronische Geräte mit schaltbaren Funktionen, wie zum Beispiel Lichtsteuerungsmöglichkeiten, oder werden als Fernbedienung (Remote Control) für beispielsweise Smartphones, Headsets oder Activity-Tracker verwendet. Bei einem Smartphone ist beispielsweise eine Funktionssteuerung möglich, bei der Anrufe durch Berührung des Schmuckelementes angenommen oder abgelehnt werden, bei einem Headset ist eine Lautstärkenregulierung denkbar und bei einem Activity-Tracker das Umschalten zwischen den Betriebsmodi. Die Anwendungsbereiche und die Funktionssteuerungsmöglichkeiten sind nur beispielhaft angegeben, umsetzbar ist eine Vielzahl von steuerbaren Funktionen.

### ELEKTRISCH LEITFÄHIGE SCHICHT

Die elektrisch leitfähige Schicht ermöglicht in Verbindung mit einer Auswertesensorik die Funktionssteuerung elektronischer Geräte. Sie ist erfindungsgemäß bevorzugt auf der gekrümmten Oberfläche des Schmucksteines aufgebracht (Abb. 1), um eine leichte Berührung mit einem Finger oder einem elektrisch leitfähigen Eingabestift zu ermöglichen. Die Transmissionseigenschaften der elektrisch leitfähigen Schicht beeinflussen die Brillanz des Schmuckelementes. Vorzugsweise ist daher die elektrisch leitfähige Schicht im Bereich von 380 - 780 nm transparent.

Metallische Schichten eignen sich aufgrund ihrer elektrischen Leitfähigkeit als elektrisch leitfähige Schicht. Sie lassen sich durch geeignete Beschichtungsverfahren, beispielsweise Sputtern (vide infra), auf dem Schmuckstein abscheiden. Metalle, wie beispielsweise Cr, Ti, Zr, V, Mo, Ta und W sind hierfür geeignet. Als elektrisch leitfähige Schicht sind Metalle, wie Al, Cu oder Ag aufgrund ihrer geringeren chemischen Beständigkeit weniger vorteilhaft, aber dennoch prinzipiell geeignet. Chemische Verbindungen mit elektrisch leitenden Eigenschaften sind ebenfalls als elektrisch leitfähige Schicht verwendbar, insbesondere chemische Nitridverbindungen, zum Beispiel TiN, TiAlN oder CrN. Die metallischen Schichten und elektrisch leitenden chemischen Verbindungen sind dem Fachmann hinlänglich bekannt.

Transparente, elektrisch leitfähige Oxidschichten sind ebenso als elektrisch leitfähige Schicht einsetzbar. Sie sind dem Fachmann wohl bekannt. Transparente, elektrisch leitfähige Oxidschichten haben eine gute mechanische Abriebfestigkeit, eine gute chemische Beständigkeit und gute thermische Stabilität. Sie enthalten halbleitende Oxide. Die halbleitenden Oxide erhalten durch eine geeignete n-Dotierung eine metallische Leitfähigkeit. Die transparenten, elektrisch leitfähigen Oxidschichten sind beispielsweise in Flachbildschirmen oder Dünnschichtsolarzellen wichtige Komponenten für transparente Elektroden.

Indiumzinnoxid ist die technisch am besten zugängliche transparente elektrisch leitfähige Oxidschicht. Sie ist ein handelsübliches Mischoxid aus circa 90% In₂O₃ und circa 10% SnO₂. Indiumzinnoxid hat sehr gute Transmissionseigenschaften, eine sehr gute mechanische Abriebfestigkeit sowie eine sehr gute chemische Beständigkeit. Erfindungsgemäß bevorzugt wird Indiumzinnoxid als elektrisch leitfähige Schicht verwendet, insbesondere wird Iniumzinnoxid mit einer Schichtdicke von wenigstens 4 nm aufgetragen, um eine elektrische Leitfähigkeit zu erhalten.

Aluminiumdotiertes Zinkoxid als transparente, elektrisch leitfähige Oxidschicht hat gute Transmissionseigenschaften und eine gute mechanische Abriebfestigkeit. Es wird beispielsweise im Bereich der Solarindustrie großtechnisch eingesetzt. Weitere geeignete transparente, elektrisch leitfähige Oxidschichten sind dotierte Zink-Oxide, wie Gallium-Zink-Oxid oder Titan-Zink-Oxid, dotierte Zinn-Oxide, wie Fluor-Zinn-Oxid, Antimon-Zinn-Oxid oder Tantal-Zinn-Oxid oder dotiertes Titan-Niob-Oxid.

Erfindungsgemäß bevorzugt umfasst die elektrisch leitfähige Schicht wenigstens eine Komponente ausgewählt aus der Gruppe Cr, Ti, Zr, Indiumzinnoxid, Aluminiumdotiertem Zinkoxid, Gallium-Zink-Oxid, Titan-Zink-Oxid, Fluor-Zinn-Oxid, Antimon-Zinn-Oxid Tantal-Zinn-Oxid oder Titan-Niob-Oxid, oder eine beliebige Kombination dieser Komponenten in einer beliebigen Schichtabfolge. Besonders bevorzugt wird Indiumzinnoxid für das erfindungsgemäße Schmuckelement abgeschieden.

Die Verfahren zur Herstellung von elektrisch leitfähigen Schichten sind dem Fachmann hinlänglich bekannt. Hierzu zählen unter anderem PVD (physical vapour deposition) und CVD (chemical vapour deposition) Verfahren. Erfindungsgemäß bevorzugt sind PVD-Verfahren.

Bei den PVD-Methoden handelt es sich um eine Gruppe von vakuumbasierten Beschichtungsverfahren beziehungsweise Dünnschichttechnologien, die dem Fachmann hinlänglich bekannt sind und insbesondere zur Beschichtung von Glas und Kunststoff in der Optik- und der Schmuckindustrie eingesetzt werden. Im PVD-Prozess wird das Beschichtungsmaterial in die Gasphase überführt. Das gasförmige Material wird anschließend zum zu beschichtenden Substrat geführt, wo es kondensiert und die Zielschicht bildet. Mit einigen dieser PVD-Verfahren (Magnetronsputtern, Laserstrahlverdampfen, thermische Bedampfung, etc.) können sehr niedrige Prozesstemperaturen verwirklicht werden. Eine Vielzahl von Beschichtungsmaterialien kann auf diese Weise in sehr reiner Form in dünnen Schichten abgeschieden werden. Führt man den Prozess in Gegenwart von Reaktivgasen wie Sauerstoff durch, so lassen sich auch beispielsweise Metalloxide abscheiden. Ein erfindungsgemäß bevorzugtes Verfahren ist ein Beschichtungsprozess mittels Sputtern, beispielsweise mit dem Gerät Radiance der Firma Evatec. Ein typisches Schichtsystem kann je nach Anforderung an Funktion und optische Erscheinung aus nur einer, aber auch aus einer Vielzahl von Schichten bestehen.

Für die Herstellung der getrennten Bereiche der elektrisch leitfähigen Schicht auf der gekrümmten facettierten Oberfläche (vide supra) wird der Schmuckstein mit einer Maskierung abgedeckt. Die Maskierung lässt die Bereiche der gekrümmten facettierten Oberfläche frei, auf die die elektrisch leitfähige Schicht abgeschieden wird. Als Maskierung eignen sich beispielsweise Abdeckungen aus Kunststoff oder Metall. Eine alternative Möglichkeit zur Herstellung der getrennten Bereiche der elektrisch leitfähigen Schicht auf der gekrümmten facettierten Oberfläche ist die Durchtrennung dieser Schicht mittels Laser, beispielsweise einem Nd:YAG Laser oder einem Ultrakurzpulslaser. Die Verwendung eines Lasers ermöglicht eine sehr präzise Herstellung der getrennten Bereiche. Die Trennung der elektrisch leitfähigen Schicht kann auch durch Ätzen erfolgen. Beim Ätzen wird beispielsweise mittels Fotolack eine Maskierung auf der elektrisch leitfähigen Schicht aufgebracht. Durch das Ätzen werden die gewünschten räumlich getrennten Bereiche der elektrisch leitfähigen Schicht hergestellt. Der Fotolack wird anschließend beispielsweise nasschemisch entfernt. Die Methoden sind dem Fachmann hinlänglich bekannt.

### WELLENLÄNGENSELEKTIVE SCHICHT

Die wellenlängenselektive Schicht erhöht die Brillanz des Schmuckelementes. Die optionale wellenlängenselektive Schicht befindet sich bevorzugt zwischen dem Schmuckstein und der Auswertesensorik. Sie wird erfindungsgemäß bevorzugt auf zwei verschiedene Weisen verwirklicht: durch eine wellenlängenselektive Folie oder aber durch eine wellenlängenselektive Beschichtung, die durch PVD, CVD oder nasschemische Verfahren hergestellt wird. Eine wellenlängenselektive Schicht kann aber ebenso durch eine mikrostrukturierte Oberfläche erhalten werden. Die Methoden zur Mikrostrukturierung sind dem Fachmann wohl bekannt.

Durch die Reflexion eines definierten Bereichs (=Filtern) des sichtbaren Spektrums gewinnt das optische Element an Brillanz und erscheint für den Betrachter in einer bestimmten Farbe. Durch die Facettierung des Schmucksteines wird die Brillanz zusätzlich unterstützt. In einer bevorzugten Ausführungsform der Erfindung reflektiert die wellenlängenselektive Schicht einen Anteil des Lichtes im Bereich von 380-780 nm, das heißt im vorwiegend sichtbaren Bereich.

Die wellenlängenselektive Schicht zeigt eine winkelabhängige Reflexion (Abb. 5a und 5b). Das Reflexionsintervall verschiebt sich je nach Einfallswinkel des Lichtes auf das Schmuckelement. In Abhängigkeit von der Lage des Schmuckelementes werden unterschiedliche Farbanteile reflektiert.

Die wellenlängenselektive Schicht ist vorzugsweise zumindest partiell für UV-Licht durchlässig, um auch eine Verklebung der einzelnen Komponenten des Schmuckelementes mit UV-härtenden Klebstoffen zu ermöglichen.

Erfindungsgemäß bevorzugt ist die wellenlängenselektive Schicht ein Dieelektrikum, um bei getrennten Teilbereichen der elektrisch leitfähigen Schicht (vide supra) eine uneingeschränkte Funktionssteuerung zu ermöglichen. Ist die wellenlängenselektive Schicht elektrisch leitend, können Fehlströme entstehen.

Im Sinne der Erfindung könnte die wellenlängenselektive Schicht prinzipiell auf der Schmucksteinoberfläche zwischen elektrisch leitfähiger Schicht und Schmucksteinoberfläche aufgebracht werden; allerdings ist dies aufgrund der möglichen Verringerung der Brillanz eine der weniger bevorzugten Ausführungsformen. Wird die wellenlängenselektive Schicht auf der planaren Seite des Schmucksteines aufgebracht, kommt es innerhalb des Schmucksteines zu Mehrfachreflexionen, die zu einer Verstärkung der Brillanz führen.

### Wellenlängenselektive Folien

Wellenlängenselektive Folien werden unter dem Begriff Radiant Light Film im Handel vertrieben. Hierbei handelt es sich um mehrschichtige polymere Filme, die auf andere Materialien appliziert werden können. Diese Lichtfolien sind Bragg-Spiegel und reflektieren einen hohen Anteil des sichtbaren Lichts und erzeugen brillante farbige Effekte. Eine reliefartige Mikrostrukturierung im Bereich von mehreren hundert Nanometern reflektiert die verschiedenen Wellenlängen des Lichtes Licht und es kommt zu Interferenzerscheinungen, wobei sich die Farben je nach Blickwinkel ändern.

Erfindungsgemäß besonders bevorzugte Folien bestehen aus mehrschichtigen polymeren Filmen, deren äußere Schicht ein Polyester ist. Solche Filme werden beispielsweise von der Firma 3M unter dem Namen Radiant Color Film CM 500 und CM 590 vertrieben. Die Filme haben ein Reflexionsintervall von 590 - 740 bzw. 500 - 700 nm.

Die wellenlängenselektive Folie wird vorzugsweise mittels eines Klebstoffs mit dem Schmuckstein verbunden. Bei transparenter elektrisch leitfähiger Schicht und transparentem Schmuckstein sollte der Klebstoff ebenfalls transparent sein. In einer bevorzugten Ausführungsform weicht der Brechungsindex des Klebstoffs weniger als ± 20 % von dem Brechungsindex des transparenten Schmucksteines ab. In einer besonders bevorzugten Ausführungsform ist die Abweichung < 10 %, ganz besonders bevorzugt < 5 %. Nur auf diese Weise wird gewährleistet, dass Reflexionsverluste aufgrund der unterschiedlichen Brechungsindizes minimiert werden können. Die Brechungsindices können auch durch Aufrauhung der jeweiligen Grenzschichten aneinander angepasst werden (Mottenaugeneffekt). Sogenannte Mottenaugenoberflächen bestehen aus feinen Noppenstrukturen, die das Brechungsverhalten des Lichtes nicht schlagartig, sondern idealerweise kontinuierlich verändern. Dadurch werden die scharfen Grenzen zwischen den unterschiedlichen Brechzahlen beseitigt, so dass der Übergang fast fließend erfolgt und das Licht ungehindert hindurch dringen kann. Die Strukturgrößen, die dafür erforderlich sind, müssen kleiner als 300 nm sein. Durch Mottenaugeneffekte wird sichergestellt, dass die Reflexion an den Grenzschichten minimiert wird und somit eine höhere Lichtausbeute beim Durchgang durch die Grenzschichten erzielt wird.

Klebstoffe, die mittels UV ausgehärtet werden können, sind erfindungsgemäß bevorzugt. Dem Fachmann sind sowohl die UV-härtenden Klebstoffe wohl bekannt als auch die Verfahren zur Bestimmung des Brechungsindex. Erfindungsgemäß besonders bevorzugt ist die Verwendung von Acrylat-Klebstoffen, insbesondere von modifizierten Urethanacrylat-Klebstoffen. Diese werden von zahlreichen Firmen vertrieben, beispielsweise von Delo unter der Bezeichnung Delo-Photobond^{®} PB 437, ein Klebstoff, der durch UV-Licht im Bereich von 320-42 nm ausgehärtet werden kann.

### Wellenlängenselektive Beschichtung

Die Beschichtungsmaterialien sind dem Fachmann wohl bekannt. In einer bevorzugten Ausführungsform der Erfindung ist die wellenlängenselektive Beschichtung ein Dieelektrikum (vide supra).Dielektrische Beschichtungsmaterialien können mittels einer der gängigen Beschichtungsverfahren auf den Schmuckstein aufgebracht werden. Es können auch aufeinanderfolgende Schichten verschiedener dieelektrischer Materialien aufgebracht werden. Die Verfahren zur Herstellung von Beschichtungen sowie die Beschichtungen selbst sind dem Fachmann hinlänglich bekannt. Hierzu zählen unter anderem PVD (physical vapour deposition), CVD (chemical vapour deposition), Lackieren sowie nasschemische Verfahren gemäß Stand der Technik. Erfindungsgemäß bevorzugt sind PVD-Verfahren (vide supra).

Für den erfindungsgemäßen Aufbau einer dieelektrischen wellenlängenselektiven Beschichtung eignen sich vorzugsweise folgende Beschichtungsmaterialien: MgF₂, SiO₂, CeF₃, Al₂O₃, CeO₃, ZrO₂, Si₃N₄, Ta₂O₅, TiO₂ oder eine beliebige Kombination dieser Verbindungen in beliebiger Schichtabfolge, besonders bevorzugt eignet sich eine Abfolge von TiO₂ und SiO₂ Schichten. Durch geeignete Wahl von Beschichtungsmaterialien, Schichtanzahl und Schichtdicken kann der gewünschte Reflexions- und Transmissionsgrad eingestellt werden.

Für die PVD-Schichterzeugung steht eine Vielzahl handelsüblicher Maschinen zur Verfügung, beispielsweise das Modell BAK1101 der Firma Evatec.

Die Erfindung wird nachfolgend an Hand von Beispielen und Abbildungen näher illustriert ohne darauf beschränkt zu sein. Die Abbildungen zeigen folgende Gegenstände:
- Abb. 1:: Aufbau eines Schmuckelements. Elektrisch leitfähige Schicht in Teilbereichen des Schmucksteines und wellenlängenselektive Beschichtung auf der der Facettierung gegenüberliegenden planen Seite.
- Abb. 2a:: Eine elektrisch leitfähige Verbindung zwischen elektrisch leitfähiger Schicht und Auswertesensorik durch Federkontaktstift.
- Abb. 2b:: Eine elektrisch leitfähige Verbindung zwischen elektrisch leitfähiger Schicht und Auswertesensorik durch elektrisch leitfähige Schmucksteinfassung.
- Abb. 2c:: Eine elektrisch leitfähige Verbindung zwischen elektrisch leitfähiger Schicht und Auswertesensorik durch elektrisch leitfähigen Klebstoff.
- Abb. 2d:: Eine elektrisch leitfähige Verbindung zwischen elektrisch leitfähiger Schicht und Auswertesensorik durch elektrisch leitfähige Folie oder elektrisch leitfähiges Elastomer.
- Abb. 3a:: Schmuckelement mit zwei getrennten Teilbereichen der transparenten, elektrisch leitfähigen Schicht für Push- beziehungsweise Slide-Eingabe.
- Abb. 3b:: Schmuckelement mit vier getrennten Teilbereichen der transparenten, elektrisch leitfähigen Schicht für Push- beziehungsweise Slide-Eingabe.

### GEWERBLICHE ANWENDBARKEIT

Die erfindungsgemäßen Schmuckelemente können zur Funktionssteuerung zahlreicher elektronischer Geräte eingesetzt werden.

## Patentansprüche

1. Schmuckelement, umfassend
(a) einen Schmuckstein und
(b) eine elektrisch leitfähige Schicht auf wenigstens einem Teilbereich des Schmucksteines.

2. Schmuckelement nach Anspruch 1, **dadurch gekennzeichnet, dass** die elektrisch leitfähige Schicht wenigstens eine Komponente aus der Gruppe Cr, Ti, Zr, Indiumzinnoxid, Aluminiumdotiertem Zinkoxid, Gallium-Zink-Oxid, Titan-Zink-Oxid, Fluor-Zinn-Oxid, Antimon-Zinn-Oxid, Tantal-Zinn-Oxid oder Titan-Niob-Oxid umfasst oder eine beliebige Kombination dieser Komponenten in beliebiger Schichtabfolge.

3. Schmuckelement nach wenigstens einem der vorhergehenden Ansprüche, **dadurch gekennzeichnet, dass** die elektrisch leitfähige Schicht transparent ist.

4. Schmuckelement nach wenigstens einem der vorhergehenden Ansprüche, **dadurch gekennzeichnet, dass** die elektrisch leitfähige Schicht auf wenigstens zwei getrennten Teilbereichen des Schmucksteines aufgebracht ist.

5. Schmuckelement nach wenigstens einem der vorhergehenden Ansprüche, **dadurch gekennzeichnet, dass** das Schmuckelement zusätzlich einen elektronischen Sensor umfasst.

6. Schmuckelement nach Anspruch 5, **dadurch gekennzeichnet, dass** der elektronische Sensor einen kapazitiven oder resistiven Sensor enthält.

7. Schmuckelement nach wenigstens einem der vorhergehenden Ansprüche, **dadurch gekennzeichnet, dass** der Schmuckstein aus Glas oder aus Kunststoff gefertigt ist.

8. Schmuckelement nach wenigstens einem der vorhergehenden Ansprüche, **dadurch gekennzeichnet, dass** der Schmuckstein plan-konvexe oder plan-konvex-konkave Teilbereiche aufweist.

9. Schmuckelement nach wenigstens einem der vorhergehenden Ansprüche, **dadurch gekennzeichnet, dass** der Schmuckstein facettiert ist.

10. Schmuckelement nach wenigstens einem der vorhergehenden Ansprüche, **dadurch gekennzeichnet, dass** auf wenigstens einem Teilbereich des Schmucksteines eine wellenlängenselektive Schicht aufgebracht ist.

11. Schmuckelement nach Anspruch 10, **dadurch gekennzeichnet, dass** die wellenlängenselektive Schicht eine dieelektrische Beschichtung ist.

12. Schmuckelement nach Anspruch 11, **dadurch gekennzeichnet, dass** die dieelektrische Beschichtung wenigstens eine Metallverbindung enthält, vorzugsweise mit einem Aufbau, der eine Abfolge von SiO₂ - und TiO₂ -Schichten umfasst.

13. Schmuckelement nach wenigstens einem der vorhergehenden Ansprüche, **dadurch gekennzeichnet, dass** der Schmuckstein transparent ist.

14. Schmuckelement nach wenigstens einem der vorhergehenden Ansprüche, umfassend
a) einen facettierten Schmuckstein aus Glas,
b) eine elektrisch leitfähige Schicht aus Indiumzinnoxid und
c) eine wellenlängenselektive Schicht mit einem Aufbau, der eine Abfolge von SiO₂ - und TiO₂-Schichten umfasst.

15. Verfahren zur Funktionssteuerung von elektronischen Geräten umfassend die folgenden Schritte:
a) Bereitstellen eines Schmucksteines, der mit einer elektrisch leitfähigen Schicht beschichtet ist,
b) Berühren der elektrisch leitfähigen Schicht mit einem Finger oder Eingabestift und
c) Auslösen einer Funktion der Auswertesensorik durch die Berührung.
